Europäisches Patentamt

European Patent Office

Office européen des brevets

(19)

(11) Veröffentlichungsnummer: **0 050 747**

**A1**

(12) # EUROPÄISCHE PATENTANMELDUNG

(21) Anmeldenummer: **81107791.6**

(22) Anmeldetag: **30.09.81**

(51) Int. Cl.³: **F 16 K 17/30**

(30) Priorität: **28.10.80 DE 3040529**

(43) Veröffentlichungstag der Anmeldung:
**05.05.82 Patentblatt 82/18**

(84) Benannte Vertragsstaaten:
**BE CH DE FR LI NL**

(71) Anmelder: **Hans Hermes Steuerungstechnik**
**Kapellenstrasse 2**
**D-6981 Faulbach/Main(DE)**

(72) Erfinder: **Hermes, Hans**
**Kapellenstrasse 2**
**D-6981 Faulbach(DE)**

(74) Vertreter: **Jaeger, Klaus Dr.**
**JAEGER & PARTNER Patentanwälte Bergstrasse 48 1/2**
**D-8035 München-Gauting(DE)**

(54) **Hydraulisches Sicherheitsventil.**

(57) Hydraulisches Sicherheitsventil mit einem federbeaufschlagten Verschlußteil (6) und einem federbeaufschlagten Sperrteil (7), wobei das Verschlußteil in Abwesenheit eines hydraulischen Arbeitsdrucks an einem Zulaufanschluß (2) zum Ventil den Durchgang (4) durch das Ventil sperrt. Beim Auftreten eines hydraulischen Arbeitsdrucks am Zulaufanschluß öffnet das Ventil unter Beaufschlagung des Verschlußteils durch den Arbeitsdruck und des Sperrteils durch eine Feder, durch den hydraulischen Arbeitsdruck am Zulaufanschluß und durch den am Ablaufanschluß sich aufbauenden hydraulischen Staudruck. Beim Auftreten eines hydraulischen Arbeitsdrucks am Zulaufanschluß (2) und fehlendem Staudruck am Ablaufanschluß (3) gelangt das Sperrteil in eine Sperrstellung, die der Störfall-Sicherheits-absperrung des Ventils entspricht. In dieser Stellung wird das Sperrteil (7) automatisch durch ein Verriegelungsglied (19,20) verriegelt. Dabei ist die am Zulaufanschluß angeschlossene Zulaufleitung hermetisch abgesperrt, während gleichzeitig die am Ablaufanschluß angeschlossene Ablaufleitung über eine Bypassleitung (23,24,27) drucklos geschaltet wird. Der normale Rückfluß des hydraulischen Arbeitsmediums vom Ablaufanschluß zum Zulaufanschluß erfolgt über ein im Ventil integriertes Rückschlagventil (17)

Fig 1

# JAEGER, GRAMS & PONTANI 0050747

PATENTANWÄLTE

DIPL.CHEM. DR. KLAUS JAEGER
8035 GAUTING, BERGSTR. 48'7

DIPL.-ING. KLAUS D. GRAMS
8031 STOCKDORF · KREUZWEG 34

DR.-ING. HANS H. PONTANI
8752 KLEINOSTHEIM · HIRSCHPFAD 3

HER-6-EP

Hans Hermes Steuerungstechnik

Kapellenstraße 6, 6981 Faulbach

---

Hydraulisches Sicherheitsventil

---

## Beschreibung

Die Erfindung betrifft ein hydraulisches Sicherheitsventil der im Oberbegriff des Patentanspruchs 1 genannten Art.

Hydraulische Anlagen gleich welcher Art, insbesondere hydraulische Steueranlagen, beispielsweise für die Ruderanlagen von Schiffen oder Flugzeugen oder für Maschinensteuerungen, und Arbeitsanlagen, beispielsweise Hebezeuge oder hydraulische Bremsanlagen, sind stets durch eine im folgenden kurz als "Leitungsbruch" bezeichnete Störfallöffnung des geschlossenen hydraulischen Systems vom Totalausfall bedroht. Ein Leitungsbruch in diesem Sinne kann beispielsweise durch das Bersten von hydraulischen Druckleitungen, das Lösen von Verbindungen oder das Öffnen von Kolben-Zylinder-Dichtungen erfolgen.

TELEPHON· (089) 85 02 03U; 85 74 0 80; (06027) 88 25 · TELEX: 5 21 777 Isar d

Bei größeren Anlagen sind Sicherheitsventile vorgesehen, die bei Leitungsbruch einen Verlust des hydraulischen Arbeitsmittels verhindern und die hydraulische Anlage sperren. Bei essentiellen Systemen, bei denen die hydraulische Beaufschlagung unter keinen Umständen ausfallen darf, ist die hydraulische Anlage als parallel wirkende Zwillingsanlage ausgelegt. Solche Anlagen sind zum einen konstruktiv und von der Investition her aufwendig und bergen zum anderen die Gefahr der Blockierung in sich. Eine Blockierung des Systems kann insbesondere dann auftreten, wenn das durch den Leistungsbruch entstandene Leck zwar groß genug ist, um nicht mehr die erforderlichen Stellkräfte übertragen zu können, andererseits aber nicht groß genug ist, um das beaufschlagte Stellorgan des Systems, beispielsweise den Arbeitszylinder der Ruderanlage eines Schiffes, absolut druckfrei zu geben.

Der Erfindung liegt die Aufgabe zugrunde, ein Sicherheitsventil der eingangs genannten Art zu schaffen, das in Abwesenheit eines hydraulischen Arbeitsdrucks am Zulaufanschluß in Flußrichtung vom Zulaufanschluß zum Ablaufanschluß sperrt, das beim Auftreten eines hydraulischen Arbeitsdrucks am Zulaufanschluß öffnet und das bei ablaufseitigem Leitungsbruch den Zulaufanschluß hermetisch absperrt.

Zur Lösung dieser Aufgabe wird ein Sicherheitsventil der eingangs genannten Art geschaffen, das erfindungsgemäß die im kennzeichnenden Teil des Patentanspruchs 1 genannten Merkmale aufweist.

In seiner Grundkonzeption beruht der Erfindungsgedanke also darauf, bei einem hydraulischen Sicherheitsventil der genannten Art mit federbeaufschlagtem Verschlußteil zusätzlich durch die Druckdifferenz zwischen dem am Zulaufanschluß auftretenden hydraulischen Arbeitsdruck und dem am Abflußanschluß sich unverzögert aufbauenden hydraulischen Staudruck ein Sperrteil, genauer gesagt ein Sicherheitssperrteil zu steuern, und zwar in der Weise, daß das Ventil unterhalb eines vorgegebenen Arbeitsdrucks sperrt, dann mit
zunehmendem Arbeitsdruck öffnet und nach Überschreiten einer
kritischen vorgegebenen Größe der Druckdifferenz zwischen
dem Arbeitsdruck und dem Staudruck, also nach unzulässig
großem Druckabfall in der Ablaufleitung bei unverändert
hohem Arbeitsdruck, wieder sperrt.

Die Stellung des Verschlußteils bei der Druck-Nenndifferenz
Null ist im folgenden kurz als "Normalbetrieb-Verschlußstellung" bezeichnet. Die Stellung des Sperrteils bei Überschreiten der maximal zulässigen Druckdifferenz zwischen Zulaufanschluß und Ablaufanschluß ist im folgenden kurz als "Störfall-Sperrstellung" bezeichnet.

Nach einer Ausgestaltung der Erfindung weist das Ventil ein
Verriegelungsglied auf, das das Sperrteil beim Erreichen
seiner Störfall-Sperrstellung in dieser Stellung verriegelt.
Dadurch ist ein zufälliges und unbeabsichtigtes Wiederöffnen
des Ventils nach Überschreiten der maximal zulässigen Sicherheitsdruckdifferenz ausgeschlossen. Zum erneuten Wiederöffnen des Ventils muß zunächst die durch das Verriegelungsglied herbeigeführte Verriegelung aufgehoben werden. Diese
Aufhebung der Verriegelung kann dabei sowohl manuell als
auch ferngesteuert erfolgen. Das Verriegelungsglied kann
im einfachsten Fall ein federbeaufschlagter Sperrzapfen sein,
der entweder das Sperrteil direkt oder ein mit dem Sperrteil
starr verbundenes Organ blockiert, beispielsweise durch Einrasten in eine entsprechend ausgebildete Ausnehmung oder
durch Blockieren des Verschiebungsweges gegen einen Anschlag.

Um zu gewährleisten, daß das durch das hydraulische System
beaufschlagte Stellorgan auch nach Störfall-Sperrung des
Sicherheitsventils durch eine Parallelleitung oder ein Zwillingssystem voll funktionsfähig bleibt, ist das Sicherheitsventil nach einer weiteren Ausbildung der Erfindung mit einer Bypassleitung versehen, die das in aller Regel federbeaufschlagte Rückschlagventil für den Rückflußdurchgang drucklos und widerstandslos umgeht und die unter Steuerung durch das Sperrteil oder durch das Sperrteil selbst automatisch mit dem Ablaufanschluß des Sicherheitsventils verbunden wird, sobald das Sperrteil in den Störfall-Sperrzustand übergeht.

Schließlich kann das Sicherheitsventil auch so ausgebildet sein, daß jedem Zulaufanschluß nicht nur ein Ablaufanschluß, sondern zwei oder mehr Ablaufanschlüsse zugeordnet sind, die jeweils hydraulisch voneinander getrennt und unabhängig sind und von denen jedem ein eigenes Verschlußteil und Sperrteil zugeordnet ist. Dabei wird jedes einzelne dieser Verschlußteile und Sperrteile jeweils einerseits gleichmäßig von dem am Zulaufanschluß auftretenden hydraulischen Arbeitsdruck beaufschlagt und wird andererseits unabhängig und individuell von dem jeweils an dem jeweils zugeordneten Ablaufanschluß auftretenden Staudruck gleichsinnig mit der Federbeaufschlagung und gegensinnig zur Beaufschlagung durch den Arbeitsdruck beaufschlagt. Ein solches Ventil bietet die wirtschaftlich außerordentlich günstige Möglichkeit, statt kompletter Zwillingsanlagen lediglich parallele hydraulische Druckleitungen vorzusehen. Bei Leitungsbruch in einer der Leitungen sperrt das Sicherheitsventil in der angegebenen Weise den zugeordneten Ablaufanschluß, während der Durchgang über die parallele unverletzte Leitung offenbleibt. Diese Auslegung hydraulischer Anlagen ist dann besonders zuverlässig, wenn das Sicherheitsventil unmittelbar vor oder integriert in die aktiven Elemente (beispielsweise Druckquelle oder Arbeitszylinder) der hydraulischen Anlage angeordnet ist. In komplizierten hydraulischen Anlagen können die Sicherheitsventile auch zu mehreren in Blöcken zusammengeschaltet oder in einem einheitlichen Bauteil zusammengefaßt werden.

Das Verschlußteil und das Sperrteil können separat, beispielsweise als einstellbares Druckbegrenzungsventil und Kolbenschieber, können kombiniert und gekoppelt miteinander, beispielsweise als Kolbenschieber mit zwei Kolben, die an einer gemeinsamen Kolbenstange befestigt sind und auf ein und denselben Durchflußquerschnitt einwirken, oder einstückig als ein einziges Teil ausgebildet sein, beispielsweise als ein einziger Kolben eines Schiebers, der mit mehreren Durchflußquerschnitten zusammenwirken kann.

Vorzugsweise ist die Ansprechcharakteristik des Sperrteils gedämpft ausgebildet, beispielsweise über die natürliche Trägheit hinaus durch eine hydraulische Verdrängungsdrosselung.

Die Erfindung ist im folgenden an Hand von Ausführungsbeispielen in Verbindung mit den Zeichnungen näher erläutert. Es zeigen:

Fig. 1      im Schnitt ein erstes Ausführungsbeispiel der Erfindung;

Fig. 2      in schematischer Darstellung ein erstes Anwendungsbeispiel;

Fig. 3      in schematischer Darstellung ein zweites Anwendungsbeispiel der Erfindung; und

Fig. 4      im Schnitt ein zweites Ausführungsbeispiel der Erfindung.

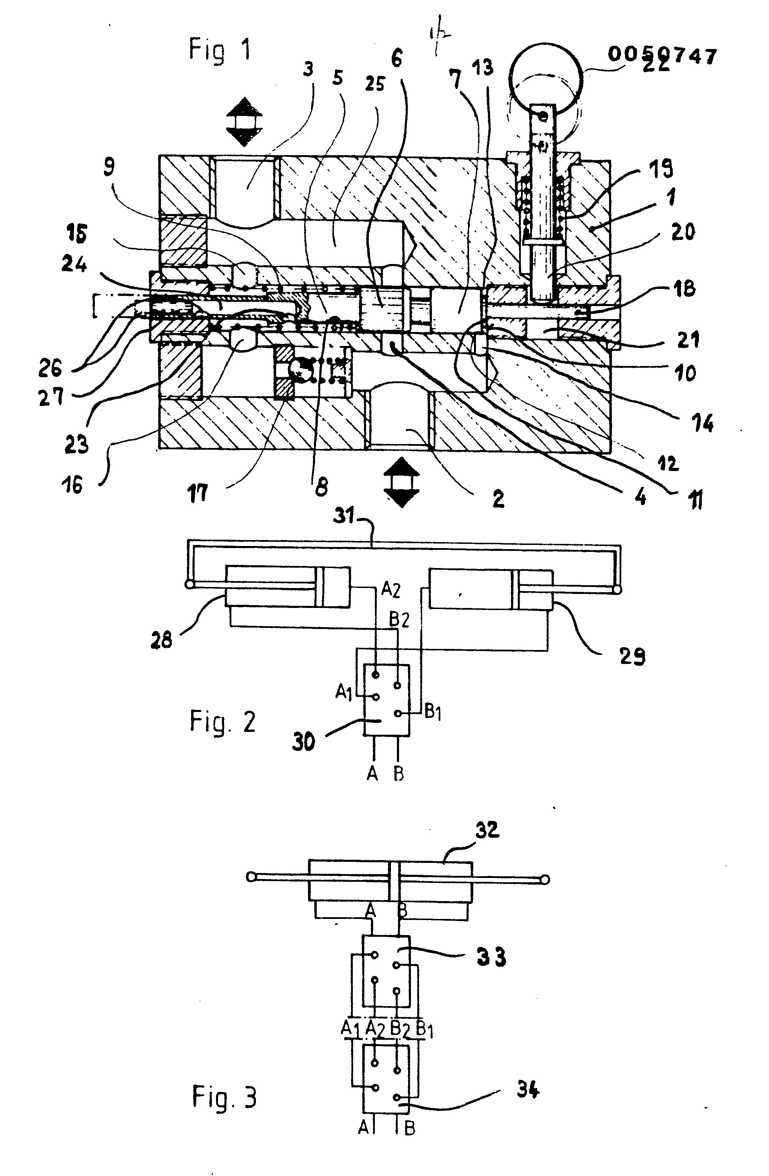

Bei dem in Fig. 1 gezeigten Ausführungsbeispiel des Sicherheitsventils der Erfindung sind das Verschlußteil
des Ventils und das Sperrteil gemeinsam als Doppelkolbenschieber ausgebildet. In einem Ventilgehäuse 1, in dem ein
Einlaßanschluß 2 und ein Auslaßanschluß 3 ausgebildet sind,
die durch einen Durchgang 4 miteinander verbunden sind,
ist senkrecht zum Durchgang 4 verschiebbar eine Kolbenstange 5 gelagert, die starr befestigt mit Abstand voneinander
zwei Kolben 6,7 trägt. Die Kolben sind abdichtend in einen
im Gehäuse 1 ausgebildeten Zylinder 8 axial verschiebbar
eingepaßt. Der Zylinder 8 wird vom Durchgang 4 radial durchsetzt. Die Verschiebbarkeit der Kolben 6,7 im Zylinder 8
ist so bemessen, daß der Durchgang 4 sowohl durch den Kolben 6, der als Verschlußteil dient und im folgenden als Verschlußkolben bezeichnet ist, als auch durch den Kolben 7, der
als Sperrteil dient und im folgenden als Sperrkolben bezeichnet ist, vollständig und dicht versperrt werden kann. Dabei
sind der Verschlußkolben 6 und der Sperrkolben 7 mit einem
solchen Abstand voneinander auf der Kolbenstange 5 angeordnet, daß der Durchgang 4 vollständig offen ist, wenn die Kolben 6,7 so im Zylinder 8 stehen, daß der Durchgang 4 zwischen
beiden Kolben, also zwischen dem Verschlußkolben 6 und dem
Sperrkolben 7 liegt.

Der Kolbenschieber 5,6,7 ist durch eine Druckfeder 9 gegen einen Anschlag 10 in der Weise beaufschlagt, daß der Verschlußkolben 6 den Durchgang 4 in Abwesenheit eines hydraulischen Arbeitsdrucks am Zulaufanschluß 2 vollständig versperrt. In dieser Stellung liegt die Stirnfläche eines axial vorspringenden Zentralbereichs 11 der dem Verschlußkolben 6 abgekehrten Stirnfläche des Sperrkolbens 7 an der Anschlagfläche 10 an. Auf dieser im folgenden als "Steuerfläche" bezeichneten Stirnseite des Sperrkolbens ist von der gegenüber dem Zentralbereich 11 axial zurückspringenden Kreisringfläche 12 im Zusammenwirken mit der Innenwand des Zylinders 8 und der gleichzeitig die dicht abschließende Stirnwand des Zylinders 8 bildenden Anschlagfläche 10 ein Ringraum 13 definiert, der über eine Bohrung 14 mit dem Zulaufanschluß 2 in Verbindung steht. Beim Auftreten eines hydraulischen Arbeitsdrucks am Zulaufanschluß 2 wirkt dieser hydraulische Arbeitsdruck über die Bohrung 14 und den Ringraum 13 auf die Kreisringfläche 12 der Steuerfläche des Sperrkolbens 7. Dadurch wird der Kolbenschieber 5,6,7 gegen die Beaufschlagung durch die Druckfeder 9 so verschoben (in der Darstellung der Fig. 1 nach links verschoben), daß der Durchgang 4 vom Zulaufanschluß 2 zum Ablaufanschluß 3 allmählich freigegeben wird. Dabei wird die auf den Kolbenschieber öffnend wirkende Kraft beim Abheben der Stirnfläche des vorspringenden Zentralbereiches 11 vergrößert, da dann auch auf diese Stirnfläche der hydraulische Arbeitsdruck einwirkt.

Mit dem Öffnen des Durchgangs 4 baut sich aufgrund des an dem an den Ablaufanschluß 3 angeschlossenen Verbraucher auftretenden Widerstand ein Staudruck auf, der über eine Bohrung 15 gleichsinnig mit der Feder 9 in Schließrichtung auf den Kolbenschieber 5,6,7 einwirkt. Je größer also der am Zulaufanschluß 2 auftretende hydraulische Arbeitsdruck
und je geringer der am Ablaufanschluß 3 austretende Staudruck ist, umso weiter ist also der Durchgang 4 unter Freigabe durch den Verschlußkolben 6 geöffnet. Je geringer der
hydraulische Arbeitsdruck am Zulaufanschluß 2 und je größer
der am Ablaufanschluß 3 auftretende Staudruck ist, desto
kleiner ist der Querschnitt, den der Verschlußkolben 6 im
Durchgang 4 freigibt. Wenn der Druck des hydraulischen
Arbeitsmediums am Ablaufanschluß 3 größer als am Zulaufanschluß 2 ist, kann das hydraulische Medium über die
Bohrung 15 und eine Bohrung 16, die Führungshülse der Feder 9
durchsetzen, und über ein Rückschlagventil 17 zum Zulaufanschluß 2 zurückfließen.

Wenn in Gegenwart eines hydraulischen Arbeitsdrucks am
Zulaufanschluß 2 in der am Ablaufanschluß 3 angeschlossenen
Ablaufleitung ein Leitungsdruck auftritt, wird der Kolbenschieber 5,6,7 durch den hydraulischen Arbeitsdruck der
Federbeaufschlagung durch die Feder 9 entgegen (in der
Fig. 1 nach links) verschoben, ohne daß dieser verschiebend
wirkenden Kraft des hydraulischen Arbeitsdrucks ein Staudruck entgegenwirkt. Dies führt dazu, daß der Kolbenschieber
5,6,7 entgegen der Federbeaufschlagung so weit verschoben
wird, daß der zunächst zwischen den Kolben 6,7 vollständig
geöffnete Durchgang 4 dann wieder durch den Sperrkolben 7
vollständig verschlossen wird. Durch diese extreme Verschiebung des Kolbenschiebers 5,6,7 gibt ein über die
Steuerfläche 11,12 des Sperrkolbens 7 axial hinausreichender
Abschnitt 18 der Kolbenstange 5 einen durch eine Feder 19
beaufschlagten Sperrkolben 20 frei, der in einer radial
zur Kolbenstange 5 liegenden Führung 21 hinter das stirnseitige Ende des Kolbenstangenabschnitts 18 unter Beaufschlagung durch die Feder 19 springt und dadurch den Kolbenschieber 5,6,7 in einer Stellung verriegelt, in der der
Sperrkolben 7 den Durchgang 4 vollkommen absperrt ("Störfall-Sperrstellung").

Nach Beheben der Störung braucht der Sperrzapfen 20 lediglich manuell an einen Griff 22 gegen die Beaufschlagung durch die Feder 19 zurückgezogen zu werden, um der Feder 9 die Rückführung des Kolbenschiebers 5 ,6,7 in seine normale Stellung zu ermöglichen, in der der Durchgang 4 vom Verschlußkolben 6 verschlossen ist. Dabei ist der Abschnitt 18 der Kolbenstange 5 so lang ausgebildet, daß der Sperrzapfen 20 bei normalem Öffnen und Schließen des Durchgangs 4 durch den Verschlußkolben 6 nicht hinter das äußere stirnseitige Ende dieses Kolbenstangenabschnitts 18 springen kann.

Im Bereich der Druckfeder 9 und der Bohrungen 15,16 durch die Druckfederführungshülse ist die Kolbenstange 5 hohl ausgebildet. Über eine Bohrung 23 steht der Hohlraum 24 der Kolbenstange 5 frei mit dem Ablaufanschluß 3 und den sich an diesen anschließenden Raum 25 in Verbindung. Eine zweite Bohrung 26, die sich zum Hohlraum 24 öffnet, ist unter normalen Betriebsbbedingungen durch den Innenmantel eines Zylinders 27, in dem die Kolbenstange 5 geführt ist, hermetisch verschlossen. Gelangt der Kolbenschieber dagegen in seine Störfall-Sperrstellung, in der der Sperrkolben 7 den Durchgang 4 versperrt, tritt die Bohrung 26 aus dem Zylinder 27 aus, so daß der Ablaufanschluß 3 über den nachgeschalteten Fluidraum 25, die Bohrung 15, die Bohrung 23, den Hohlraum 24 und die Bohrung 26 drucklos und widerstandslos, also unter Umgehung des Rückschlagventils 17, geöffnet ist. Dies gewährleistet, daß bei Betätigung des durch das hydraulische System beaufschlagten Verbrauchers über eine Zwillingsanlage die in der Ablaufleitung verbliebene hydraulische Arbeitsflüssigkeit über diese Bypassleitung rasch und widerstandslos ablaufen kann.

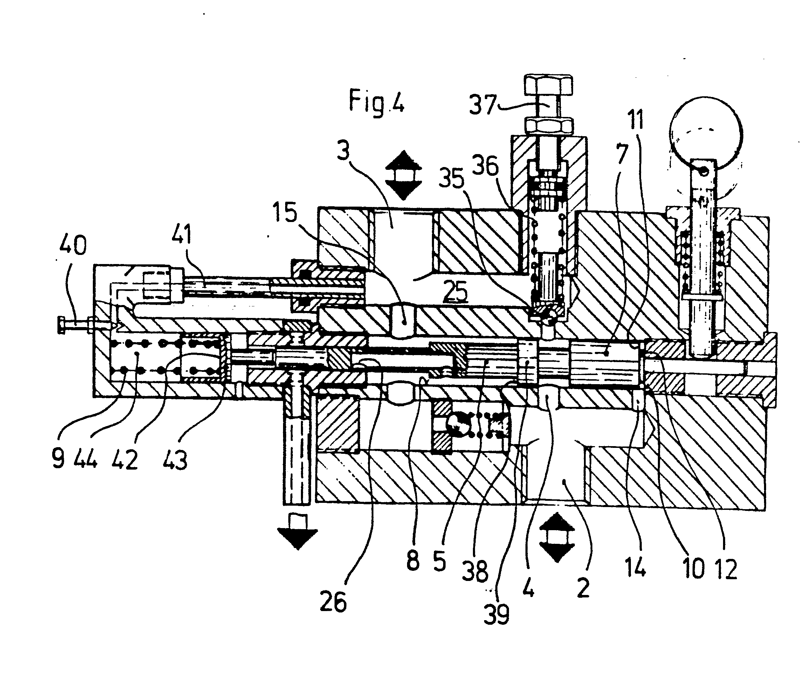

Ein Ausführungsbeispiel für die Anwendung des Sicherheitsventils ist schematisch in der Fig. 2 gezeigt. Zwei doppeltwirkende hydraulische Arbeitszylinder 28,29, die gegenläufig

- 10 -

0050747

geschaltet sind, sind durch einen Sicherheitsventilblock 30 hydraulisch abgesichert. Der Sicherheitsventilblock 30 besteht aus zwei Sicherheitsventilen der in Fig. 1 gezeigten Art, wobei jedoch jedem Zulaufanschluß, in der Fig. 2 den Zulaufanschlüssen A und B, nicht nur wie in Fig. 1 gezeigt ein Ablaufanschluß, sondern jeweils zwei Ablaufanschlüsse, nämlich die Ablaufanschlüsse A1 und A2 bzw. B1 und B2, bzw. entsprechend bezeichnete Ablaufleitungen, zugeordnet sind.

Wenn beispielsweise bei der in Fig. 2 gezeigten Anlage die mit dem Ablaufanschluß A2 verbundene Druckleitung für den hydraulischen Arbeitszylinder 28, der dessen Kolben in der in Fig. 2 gezeigten Darstellung nach links verschiebt, durch Bruch ausfällt, wird durch das Sicherheitsventil die Leitung bzw. der Ablaufanschluß A2 sofort verriegelt gesperrt, während die Gesamtanlage insgesamt unbeeinträchtigt über die mit den Ablaufanschlüssen A1, B1 und B2 verbundenen Druckleitungen weiterhin funktionsfähig bleibt. Lediglich bei Verschiebung der Steuerstange 31 in der in Fig. 2 gezeigten Darstellung nach links steht für den hier angenommenen Störfall des Bruchs der an den Anschluß A2 angeschlossenen Leitung nur die halbe Kraft zur Verfügung. In der Gesamtanlage werden jedoch die verbleibenden drei Zylinderflächen voll und unbeeinträchtigt beaufschlagt, wobei durch die Bypassleitung, die den Anschluß A2 drucklos und widerstandslos entleert, der Funktionsfähigkeit des Koppelsystems der hydraulischen Arbeitszylinder 28 und 29 in keiner Weise beeinträchtigt.

Ein weiteres Anwendungsbeispiel des Sicherheitsventils ist schematisch in der Fig. 3 dargestellt. Ein in zwei Verschiebungsrichtungen aktiver hydraulischer Stellzylinder 32 wird durch zwei hydraulische Druckleitungen A und B angesteuert. Unmittelbar vor dem hydraulischen Arbeitszylinder 32 ist ein Sicherheitsventilblock 33 und unmittelbar vor der in der Figur nicht dargestellten Arbeitsdruckquelle ein
Sicherheitsventilblock 34 angeordnet, die jeweils den
gleichen Aufbau und die gleiche Struktur wie der Sicherheitsventilblock 30 haben, der vorstehend im Zusammenhang
mit der Fig. 2 beschrieben worden ist. Die beiden in Fig. 3
gezeigten Sicherheitsventilblöcke 33 und 34 sind dabei gegensinnig geschaltet, d.h. also, jeweils mit ihren Ablaufanschlüssen A1, A2, B1 und B2 direkt, jedoch über Verbindungsleitungen in der jeweils benötigten Länge, miteinander verbunden. Eine solche Schaltung kann insbesondere bei hydraulisch gesteuerten Ruderanlagen von Schiffen Verwendung finden, wo der hydraulische Arbeitszylinder unmittelbar am
Ruderquadranten am Heck des Schiffes angeordnet ist, während
die Druckquelle für die hydraulische Steuerung, die hydraulische Druckpumpe, relativ weit von diesem Ort an einem zugänglichen Abschnitt der Hauptwelle des Schiffes vorgesehen
ist. Wenn bei dieser Schaltung eine der die Anschlüsse A1, A2,
B1 oder B2 verbindenden hydraulischen Druckleitungen bricht,
wird diese Leitung zwischen dem Arbeitszylinder 32 und der
Druckquelle sofort durch die Sicherheitsventile 33 und 34
an ihren beiden Endpunkten abgesperrt. Wenn die brechende
Leitung beispielsweise die die Anschlüsse A1 miteinander verbindende Leitung ist, so läuft die Anlage übergangslos und unbeeinträchtigt durch den Bruch der die Anschlüsse A1 miteinander verbindenden Druckleitung über die verbleibenden Druckleitungen A2, B1 und B2 weiter. Die defekte Leitung kann ohne
Betriebsunterbrechung repariert oder ausgewechselt werden.
Nach Abschluß der Instandsetzungsarbeiten an der defekten
Leitung brauchen dann lediglich die Sperrverriegelungen
der Ablaufanschlüsse A1 an den Sicherheitsventilblöcken 33
und 34 gelöst zu werden, und die Gesamtanlage ist dann wieder
auf beiden Leitungszweigen mit doppelter Sicherheit betreibbar, ohne daß es auch bei Wiederinbetriebnahme des Sicherheitsastes einer der beiden Leitungsäste zu irgendeiner Betriebsunterbrechung Anlaß gegeben hätte.

Ein weiteres Ausführungsbeispiel der Erfindung ist in
der Fig. 4 gezeigt. Der Schnitt und die Art der Darstellung in Fig. 4 entsprechen im wesentlichen dem Schnitt
und der Art der Darstellung in der Fig. 1. Dementsprechend sind in der Fig. 4 für gleiche und funktionsgleiche Teile gleiche Bezugszeichen gewählt, so daß die Hauptelemente des in Fig. 4 dargestellten Ausführungsbeispiels
des Ventils hier nicht noch einmal wiederholt werden.

Der wesentliche Unterschied des in Fig. 4 gezeigten Ausführungsbeispiels gegenüber dem in Fig. 1 gezeigten Ausführungsbeispiel besteht darin, daß (1) das Verschlußteil
nicht als Kolbenschieber 6 (Fig. 1), sondern als funktionell separates Druckbegrenzungsventil ausgebildet ist, und
daß (2) die Verschiebung des Sperrkolbens 7 (Fig. 4) hydraulisch gedämpft ist.

In Abwesenheit eines Arbeitsdrucks am Zulaufanschluß 2 wird
der Sperrkolben 7 unter Beaufschlagung durch die Druckfeder 9 mit seiner Steuerfläche 11,12 flächig gegen die
Anschlagfläche 10 gezwungen. Der Durchgang 4 ist in dieser Stellung des Sperrkolbens 7 über den Zylinder 8 hinweg
offen und wird erst an seinem Ausgang zu dem mit dem Ablaufanschluß 3 in Verbindung stehenden Raum 25 durch eine als
Verschlußteil dienende Kugel 35 verschlossen. Die als Verschlußteil dienende Kugel 35 wird durch eine Druckfeder 36
sperrend gegen den Ausgang des Durchgangs 4 gezwungen. Die
Kraft, mit der das Verschlußteil 35 beaufschlagt ist, kann
über eine auf die Druckfeder 36 einwirkende feststellbare
Stellschraube 37 eingestellt werden. Das Verschlußteil 35,
die Druckfeder 36 und die Stellschraube 37 finden also gemeinsam ein einstellbares Druckbegrenzungsventil, das einen
beliebigen Mindestarbeitsdruck einzustellen ermöglicht, bei
dem das in Fig. 4 gezeigte Ventil öffnet.

Beim Auftreten eines Arbeitsdrucks am Zulaufanschluß 2 wird bis zum Öffnen des Verschlußteils 35 auch die Steuerfläche 11,12 des Sperrkolbens 7 über die Bohrung 14 beaufschlagt, so daß der Sperrkolben 7 gegen die Beaufschlagung durch die Druckfeder 9 zunächst geringfügig in Sperrichtung, in der Darstellung der Fig. 4 also nach links, verschoben wird. Unmittelbar nach dem Öffnen des Verschlußteils 35 wirkt dann jedoch der sich am Ablaufanschluß 3 aufbauende Staudruck über die Bohrung 15 auf die Arbeitsfläche 38 eines Hilfskolbens 39 ein, der fest mit der Kolbenstange 5 des Sperrkolbens 7 verbunden ist. Zusätzlich wirkt der am Ablaufanschluß 3 auftretende Staudruck auch über eine Hilfsleitung, die unter Einfügung eines Nadelventils bzw. einer Drosselschraube 40 als Drosselkanal 41 ausgebildet ist, auf eine große Arbeitsfläche 42 eines zweiten Hilfskolbens 43 ebenfalls entgegen der Sperrverschiebung des Sperrkolbens 7 ein. Beim Auftreten eines Staudrucks am Ablaufanschluß 3 wirken also die Arbeitsfläche 38 des ersten Hilfskolbens 39, die Arbeitsfläche 42 des zweiten Hilfskolbens 43 und die Druckfeder 9 insgesamt gleichsinnig dem Übergang des Sperrkolbens 7 in dem Störfall-Sperrzustand entgegen. Beim Abfall des Staudrucks am Ablaufanschluß 3 ist der Sperrkolben 7 im wesentlichen nur noch durch die Druckfeder 9 beaufschlagt, so daß der Sperrkolben 9 durch die Einwirkung des am Zulaufanschluß 2 auftretenden Arbeitsdrucks in Sperrichtung, in der Darstellung der Fig. 4 also nach links, verschoben wird. Dabei muß jedoch das in dem gleichzeitig als Federraum für die Druckfeder 9 dienenden Zylinder- oder Verdrängerraum 44 befindliche hydraulische Fluid durch den mit der Kolbenstange 5 gekoppelten zweiten Hilfskolben 43 zunächst über die Drosselschraube 40 und den Drosselkanal 41 verdrängt werden, so daß also der Übergang des Sperrkolbens 7 in den Sperrzustand hydraulisch gedämpft erfolgt. Dadurch können statistische Schwankungen der Druckdifferenz zwischen Zulaufanschluß 2 und Ablaufanschluß 3 gedämpft werden, ohne daß es zu einem unbeabsichtigten Sperren des Ventils kommt.

Patentansprüche

1. Bei Leitungsbruch in Richtung von einem Zulaufanschluß
zu einem Ablaufanschluß sperrendes hydraulisches Sicherheitsventil mit Rückflußdurchgang über ein Rückschlagventil vom Ablaufanschluß zum Zulaufanschluß,
dadurch   g e k e n n z e i c h n e t ,

(a)   daß das Ventil bei Normalbetrieb in Abwesenheit
eines Arbeitsdrucks am Zulaufanschluß (2) durch ein
federbeaufschlagtes (9;36) Verschlußteil (6;35) in
Richtung vom Zulaufanschluß (2) zum Ablaufanschluß (3)
sperrt,

(b)   daß das Ventil bei Normalbetrieb in Gegenwart
eines am Zulaufanschluß (2) auftretenden Arbeitsdrucks
und eines am Ablaufanschluß (3) unverzögert auftretenden Staudrucks öffnet, wobei der Arbeitsdruck das Verschlußteil (6;35) gegen die Kraft der Feder (9;36) öffnend beaufschlagt und gleichzeitig ein Sperrteil (7)
gegen den Staudruck und die Kraft einer mit diesem gleichsinnig wirkenden Feder (9) sperrend beaufschlagt, und

(c) · daß das Ventil im Störfall, also in Gegenwart eines
Arbeitsdrucks am Zulaufanschlu0 (2) und bei gleichzeitig
fehlendem Staudruck am Ablaufanschluß (3), durch die in
diesem Fall allein gegen die Kraft der Feder (9) wirkende Beaufschlagung des Sperrteils (7) durch den Arbeitsdruck schließt.

2. Sicherheitsventil nach Anspruch 1,
   g e k e n n z e i c h n e t   durch
   ein Verriegelungsglied (19,20), das das Sperrteil (7) nach
   Übergang in den Störfall-Sperrzustand in diesem Zustand
   verriegelt.

3.  Sicherheitsventil nach einem der Ansprüche 1 oder 2,
    g e k e n n z e i c h n e t   durch
    eine druck- und widerstandslose Bypassleitung (23,24,27),
    die das Rückschlagventil (17) umgeht und die durch das
    Sperrteil (7) beim Erreichen des Störfall-Sperrzustandes
    zum Ablaufanschluß (3) geöffnet wird.

4.  Sicherheitsventil nach einem der Ansprüche 1 bis 3,
    dadurch   g e k e n n z e i c h n e t   ,
    daß das Verschlußteil (35) Bestandteil eines einstellbaren Druckbegrenzungsventils (35,36,37) ist, daß das
    Sperrteil als Kolbenschieber mit einem Sperrkolben (7)
    und einer Kolbenstange (5) ausgebildet ist, und daß das
    Druckbegrenzungsventil (35,36,37) und der Kolbenschieber (5,7) den Durchfluß durch ein und denselben Durchgang (4) steuern, der senkrecht zur Verschiebungsrichtung des Kolbenschiebers (5,7) verläuft und den Zulaufanschluß (2) mit dem Ablaufanschluß (3) verbindet.

5.  Sicherheitsventil nach einem  der Ansprüche 1 bis 3,
    dadurch   g e k e n n z e i c h n e t   ,
    daß das Verschlußteil und das Sperrteil gemeinsam als
    Kolbenschieber (5,6,7) mit zwei auf einer gemeinsamen
    Kolbenstange (5) starr befestigten Kolben (6,7) ausgebildet sind, von denen der eine, als Verschlußkolben (6)
    dienende Kolben einen senkrecht zur Verschieberichtung
    der Kolben ausgebildeten Durchgang (4), der den Zulauf-
    anschluß (2) mit dem Ablaufanschluß (3) verbindet, bei
    Normalbetrieb versperrt oder freigibt und der andere,
    als Sperrkolben (7) dienende Kolben diesen Durchgang (4)
    im Störfall versperrt.

6. Sicherheitsventil nach einem der Ansprüche 4 oder 5,
dadurch  g e k e n n z e i c h n e t ,
daß die dem Verschlußteil (6;35) abgewandte Stirnseite (11) ("Steuerfläche") des Sperrkolbens (7) mit dem
am Zulaufstutzen (2) auftretenden hydraulischen Arbeitsdruck beaufschlagbar (11,12,13,14) ist.

7. Sicherheitsventil nach Anspruch 6,
dadurch  g e k e n n z e i c h n e t ,
daß die Steuerfläche des Sperrkolbens (7) einen axial
vorspringenden Zentralbereich (12) aufweist, der in Abwesenheit eines Arbeitsdrucks von der den Kolbenschieber (5,6,7;5,7) beaufschlagenden Feder (9) flächig gegen
eine Anschlagfläche (10) gezwungen wird.

8. Sicherheitsventil nach Anspruch 5,
dadurch  g e k e n n z e i c h n e t ,
daß die dem Sperrkolben (7) abgewandte Stirnseite des
Verschlußkolbens (6) mit dem sich am Ablaufanschluß (3)
aufbauenden Staudruck beaufschlagbar ist.

9. Sicherheitsventil nach Anspruch 3 und einem der Ansprüche 4 bis 8,
dadurch  g e k e n n z e i c h n e t ,
daß die Kolbenstange (5) zumindest teilweise hohl ist,
daß der Hohlraum (24) der Kolbenstange (5) über eine
radiale Öffnung (23) mit dem Ablaufanschluß (3) kommuniziert und daß der Hohlraum (24) der Kolbenstange (5)
einen Teil der Bypassleitung (23,24,27) bildet.

10. Sicherheitsventil nach einem der Ansprüche 4 bis 9,
dadurch  g e k e n n z e i c h n e t  ,
daß sich die Kolbenstange (5) über die Steuerfläche (11,12)
des Sperrkolbens (7) hinaus erstreckt und daß auf diesem
Abschnitt (18) der Kolbenstange (5) radial ein die Verschiebbarkeit der Kolbenstange (5) im Normalbetrieb
nicht beeinträchtigender federbeaufschlagter (19) Sperrzapfen (20) abgestützt ist, der die Kolbenstange (5) gegen eine axiale Verschiebung blockiert, wenn der Kolbenschieber (5,6,7;5,7) in den Störfall-Sperrzustand gelangt.

11. Sicherheitsventil nach einem der Ansprüche 1 bis 10,
dadurch  g e k e n n z e i c h n e t  ,
daß die Überführung des Sperrteils (7) in den Sperrzustand gedämpft ist, insbesondere durch eine hydraulische Verdrängungsdrosselung (40,41,42,43,44).

12. Sicherheitsventil nach Anspruch 11,
g e k e n n z e i c h n e t  durch
eine Drosselleitung (41), die die federbeaufschlagte (9)
Seite des Sperrteils (7) mit dem Ablaufanschluß (3) verbindet.

Fig 1

0050747

Fig. 2

Fig. 3

Fig.4

EUROPÄISCHER RECHERCHENBERICHT

**0050747**

Nummer der Anmeldung

EP 81107791.6

## EINSCHLÄGIGE DOKUMENTE

| Kategorie | Kennzeichnung des Dokuments mit Angabe, soweit erforderlich, der maßgeblichen Teile | betroffener Anspruch |
|---|---|---|
| | AT - B - 334 148 (BERINGER-HYDRAULIK GMBH)<br>* Gesamt *<br><br>-- | 1,3,4,5,8,9,11,12 |
| | DE - A - 1 909 819 (FA. PAUL WITT)<br>* Gesamt *<br><br>-- | 1,2,4-10 |
| | DE - B2 - 1 932 996 (R. BOSCH GMBH)<br>* Gesamt *<br><br>---- | 1,4-8 |

**KLASSIFIKATION DER ANMELDUNG (Int. Cl.³)**

F 16 K 17/30

**RECHERCHIERTE SACHGEBIETE (Int. Cl.³)**

F 16 K 11/00
F 16 K 17/00
G 05 D  7/00
G 05 D 11/00

| X | Der vorliegende Recherchenbericht wurde für alle Patentansprüche erstellt |
|---|---|

| Recherchenort | Abschlußdatum der Recherche | Prüfer |
|---|---|---|
| WIEN | 01-02-1982 | ROUSSARIAN |

EPA form 1503.1   06.78